(19) Europäisches Patentamt
European Patent Office
Office européen des brevets

(11) **EP 3 456 924 B1**

(12) **EUROPEAN PATENT SPECIFICATION**

(45) Date of publication and mention
of the grant of the patent:
**21.04.2021 Bulletin 2021/16**

(51) Int Cl.:
***F01D 5/30*** (2006.01)

(21) Application number: **17191871.7**

(22) Date of filing: **19.09.2017**

(54) **TURBINE BLADE ASSEMBLY AND BLADE SLOT FOR TURBO-MACHINES**

TURBINENSCHAUFELANORDNUNG UND SCHAUFELSCHLITZ FÜR TURBOMASCHINEN

ENSEMBLE PALE DE TURBINE ET FENTE D'AUBE POUR TURBOMACHINES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.03.2019 Bulletin 2019/12**

(73) Proprietor: **Siemens Aktiengesellschaft
80333 München (DE)**

(72) Inventors:
• **K, Jayavenkateshwaran
562125 Bangalore (IN)**
• **Narayanan, Arjun
560075 Bangalore, Karnataka (IN)**

(74) Representative: **Patentanwaltskanzlei WILHELM
& BECK
Prinzenstraße 13
80639 München (DE)**

(56) References cited:
**EP-A1- 3 199 764     EP-A2- 1 707 748
EP-A2- 2 208 859     JP-A- S5 872 604
US-A- 5 435 694     US-A1- 2013 224 036**

## Description

The invention relates to turbine engines. More particularly, the invention relates turbine blade assembly and blade slot in a turbine engine.

A turbine blade is an important component in turbo-machines as it is responsible for the transfer of energy between a turbo-machine and an operating fluid. During operation, a turbine blade experiences a combination of centrifugal force and cantilever force. The combination of centrifugal force and cantilever force is transferred to a disc on which the turbine blade is mounted. The disc in operation is rotatable and can also be referred to as rotating disc. The transfer of forces on the disc is achieved by a joint between a blade root of the turbine blade and a blade slot in the disc that is itself attached to a shaft of the turbo-machine. The blade slot can also be referred to as disc slot as the disc has the disc slot to receive the blade root.

The blade root is mated with the blade slot through a joint. When the disc is in operation, the blade root of the turbine blade experiences stress concentration due to a high inertial load generated by weight of the turbine blade body. Further, aerodynamic load from the operating fluid contributes to the stress concentration on the blade root.

To reduce the stresses in the blade root, the contact surfaces are generally angled to a radial axis for optimal distribution of loads between the blade root and the rotating disc. Nevertheless, the stresses in the blade root adversely impact life of the turbine blade. For example, in case of a fir-tree profiled blade root, localized concentration of high stresses is seen in lugs at surfaces in contact with the rotating disc. The high stresses are also seen at fillets connecting the lugs in the fir-tree profiled blade root. The high stress act as source of crack initiation and hence limit the turbine blade life. For example, fillets experience high tensile stresses during operation. The tensile stresses adversely impact the life of the turbine blade as they tend to propagate and open cracks in the blade root.

Such blade roots with minimized stress concentration is disclosed in the publication "Turbine blade fir-tree root design optimization using intelligent CAD and finite element analysis", Computers & Structures, 2002: 1853-1867. The publication mainly focuses on geometric design and dimensioning of the fir-tree profile.

From document EP 2 208 859 A2 a steam turbine and cooling method thereof is known. From document EP 3 199 764 A1 turbine attachment curved rib stiffeners are known. From document JP S58 72604 A a mounting construction of blade in turbomachine is known.

Therefore, it is an object of the present invention to provide a turbine blade assembly with improved useful life by minimizing the effect of the stress generated in the blade root. In an exemplary embodiment, the useful life is improved by reducing magnitude of the maximum tensile stresses observed in the blade root.

The invention achieves this object by a stress reducing structure capable of countering stress at the fillets in the blade root. Further, the stress reducing structure is provided in the blade slot as the blade slot experiences similar stresses as that of the blade root. The region between two blade slots in the disc can exhibit behavior as that of the blade root, when view upside-down. Thus, disc fillets in the blade slot between two disc lugs also experience tensile stresses. Accordingly, the stress reducing structure provided in the blade slots can therefore be used to reduce the stresses in the blade slots. This is advantageous as improving the life of the disc is desirable as replacing the disc can be expensive and cumbersome.

As used herein the "stress reducing structure" refers a discontinuous pattern in the blade root or the blade root and the blade slot, that can either be an inclusion or a void or a combination of both. The discontinuous pattern is shaped to exhibit an effective negative coupling between normal strain in two different directions (i.e. a negative Poisson ratio or auxetic effect) or an effective non-zero coupling between normal strain and shear strain (i.e. a chiral effect) or a combination of both.

As used herein the term "tensile stresses" refers to stress created when equal and opposite forces are applied on the turbine blade assembly and the rotating disc. The term tensile stress can also be referred to as tensile principal stress.

According to the present invention, a turbine blade assembly for turbo-machines is provided. Each turbine has multiple turbine blade assemblies assembled around the periphery of a turbine rotor to guide an operating fluid.

The turbine blade assembly includes a blade body with a free end and a joint end. The blade body includes an airfoil section along one side that extends from the joint end to the free end. The blade body also includes a shroud at the free end of the blade body. The turbine blade assembly also includes a blade platform at the joint end of the blade body. The blade platform is a section of the turbine blade assembly that abuts a disc of a turbo-machine.

Further, the turbine blade assembly includes a blade root that extends from the blade platform towards a disc. The disc in operation is rotatable and can also be referred to as rotating disc. The blade root is a section of the turbine blade assembly that is used to hold the blade body with the rotating disc. The disc includes a blade slot to receive the blade root. The blade slot can also be referred to as disc slot as the disc has the slot to receive the blade root.

Typically, the blade root is configured with several profile types such as dovetail, fir-tree, etc. In a preferred embodiment, the blade root has the fir tree profile that includes a plurality of fillets or necks that define a plurality of lugs.

The blade root also comprises a stress reducing structure capable of countering tensile stress at the plurality of fillets. The stress reducing structure is advantageous as it effectively reduces the magnitude of tensile principal stress in the fillets of the blade root by generating a compressive force. The stress reducing structure also ensures an improved contact between the blade root and the disc to ensure reduced concentration of stresses at the contact interface between blade root and slot. The position, pattern, and dimensions of the stress reducing structure are optimized in order to minimize the tensile stress seen in the fillets.

According to the invention a turbine blade assembly with the features of claim 1 is provided.

According to the present invention, the stress reducing structure is capable of expanding azimuthally along a disc circumference of the disc under application of radial strain along a disc radius of the rotating disc. As used herein, the term azimuthally refers to a horizontal direction that is along the disc circumference of the rotating disc. In the current embodiment, the radial strain is generated in the blade root due to the loads from the blade body when the disc is in operation.

According to the present invention, the stress reducing structure in the blade root comprises slots with one or more recess and one or more compression structures at the recess. The term "slot" as used herein refers to a line shaped aperture. In an embodiment, the slots are arranged parallel to each other. The term "recess" as used herein refers to a break in the continuity of the slots. In the present invention, the compression structures are patterned in the recesses along parallel slots. The compression structures are capable of generating compressive action along the disc radius to counter the tensile stress at the fillets. The compression structure exhibits a negative Poisson's ratio effect and therefore, is capable of generating the compressive action.

According to an embodiment of the present invention, the blade root comprises a central root section and a peripheral root section. As used herein the central root section is along a central longitudinal axis of the blade root. While the peripheral root section is the off-centre root section towards the lugs that are in contact with the rotating disc. In a preferred embodiment, the stress reducing structure is located in the central root section between two or more lugs. Accordingly, the slots, the recess and the compressive structure are arranged across two or more lugs. In view of such arrangement, the compressive structure is capable of generating compressive action between the two or more lugs along the disc radius to counter the tensile stress at one or more fillets connecting the two or more lugs.

According to the invention, the stress reducing structure located in the central root section is capable of expanding azimuthally along a disc circumference under application of the radial strain.

For example, when a turbine is in operation, the turbine blade assembly is subject to a large centrifugal force, primarily due to the mass of the blade body. The central root section of the blade root is under a large amount of tensile stress. The stress reducing structure is patterned to achieve a negative Poisson's ratio behaviour under application of the radial strain on the blade root. Accordingly, the central root section utilizes an auxetic lattice structure to exhibit azimuthal expansion under the radial strain.

The negative Poisson's ratio can be represented as a measure of coupling between normal strains. Accordingly, the negative Poisson's ratio can be expressed as $V_{xy} = -\dfrac{\varepsilon_{yy}}{\varepsilon_{xx}}$ where $\varepsilon_{yy}$ is the normal strain in y direction due to an applied strain of $\varepsilon_{xx}$ in x direction with respect to an orthogonal Cartesian co-ordinate system.

Typically, a material possesses a positive value of the Poisson's ratio. This implies that when the material is subjected to tensile strain in the x direction, it undergoes a compressive strain in the y direction. In other words, if we increase the dimension of an elastic object in one direction, it undergoes contraction in a corresponding orthogonal direction. The magnitude of the contraction in the material is dictated by the Poisson's ratio.

A material patterned to exhibit Auxetic effect is characterized by an effective negative value of the Poisson's ratio. Accordingly, when the material is subject to tensile strain in the x direction, it undergoes tensile strain in the y direction as well. The most direct way of achieving an auxetic effect is by patterning an auxetic lattice structure. In another example not belonging to the invention the auxetic lattice structure is patterned to include multiple pairs of opposing zig-zag lines. Each of the opposing zig-zag lines comprise of proximate nodes and distant nodes. The auxetic lattice structure also includes multiple ribs connecting the distant nodes of the opposing zig-zag lines.

Similarly, the peripheral root section of the blade root is under a large amount of shear strain. The stress reducing structure is patterned to achieve a chiral effect under application of the shear strain on the blade root. Accordingly, the peripheral root section utilizes chiral lattice structures to exhibit azimuthal expansion under shear strain. The chiral lattice structure is characterized by a coupling between effective normal strain and effective shear strain. Magnitude of chirality of the chiral lattice structure can be expressed as $\eta_x = \dfrac{\varepsilon_{xx}}{\varepsilon_{xy}}$ where, $\varepsilon_{xx}$ is the normal strain in the x direction due to an applied shear strain of $\varepsilon_{xy}$ with respect to an orthogonal Cartesian coordinate system. A positive value of shear strain indicates positive angular deformations in the clockwise sense.

The chiral lattice structure is characterized by a non-zero value of the coupling coefficient between effective normal strain and effective shear strain. Accordingly, depending on the architecture of the chiral lattice, such a coupling may be positive or negative in magnitude. A chiral lattice structure with a positive coupling coefficient implies that the chiral lattice structure will display an effective tensile strain in the considered normal direction, under an applied positive shear strain with respect to an orthogonal Cartesian coordinate system. Conversely, a chiral lattice structure with a negative coupling coefficient implies that the chiral lattice structure will display an effective compressive strain in the considered normal direction, under an applied positive shear strain with respect to an orthogonal Cartesian co-ordinate system.

In an example not belonging to the invention the chiral lattice structure is patterned to include multiple longitudinal zig-zag lines and multiple lateral zig-zag lines extending across the longitudinal zig-zag lines. The longitudinal zig-zag lines and the lateral zig-zag lines are patterned to be generally perpendicular to each other.

The present invention is advantageous as the stress reducing structure can be patterned in the blade root or the blade slot or both. Therefore, an effective expansive behaviour is exhibited by the blade root and/or the blade slot in the circumferential direction of the rotating disc.

According to a second object the present invention, there is also disclosed a turbo-machine with improved useful life. The turbo-machine includes a housing and a rotor housed within the housing. The rotor includes a disc that includes one or more blade slots. The turbo-machine includes one more of turbine blade assemblies as defined in claim 1 . Further, the blade roots are insertable into the blade slots in an axial direction to engage the blade slots to secure the turbine blade assembly to the rotating disc. According to the present invention, the turbine blade assembly includes a blade root with lugs and fillets.

Accordingly, the blade slots also include one or more disc fillets to compliment the lugs of the blade root. The turbo- machine according to the present invention is advantageous as the blade slots include the stress reducing structure capable of countering tensile stress in the disc fillets of the blade slots.

The position and pattern of the stress reducing structure is optimized in the blade roots and the blade slots to reduce the tensile stress at the fillets of the blade root. Further, the stress reducing structure in the blade slots are patterned to exhibit the negative Poisson ratio and the chiral effect under the application of radial strain and shear strain, respectively.

According to a third aspect of the present invention, a method for manufacturing of a turbo-machine ding to claim is provided. The method includes the steps of generating the blade slot and the turbine blade assembly with the stress reducing structure via one of electrical discharge machining (EDM), laser cutting techniques and additive manufacturing techniques. In an embodiment, the wire cut EDM is used to generate the blade slot and the turbine blade assembly. In another embodiment, the laser cutting techniques include wet laser cutting. In yet another embodiment, the additive manufacturing techniques of either selective laser sintering or selective laser melting or electron beam melting are used to generate the blade root and the blade slot.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:

FIG 1 is a schematic of stress experienced in a turbine blade assembly;

FIG 2 is a schematic of a turbine blade assembly with a stress reducing structure, according to the present invention;

FIG 3 illustrates operation of the stress reducing structure of the turbine blade assembly in FIG 2;

FIG 4 is a schematic of a blade root for a turbine blade assembly not belonging to the invention;

FIG 5A is a schematic of a blade root for another turbine blade assembly not belonging to the invention;

FIG 5B illustrates shape of a chiral lattice structure of the blade root in FIG 5A;

FIG 6A is a schematic of a blade slot in a disc with a stress reducing structure according to the present invention;

FIG 6B is another schematic of a blade slot in a disc with a stress reducing structure according to the present invention;

FIG 7 is a schematic of a rotor of a turbo machine according to the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

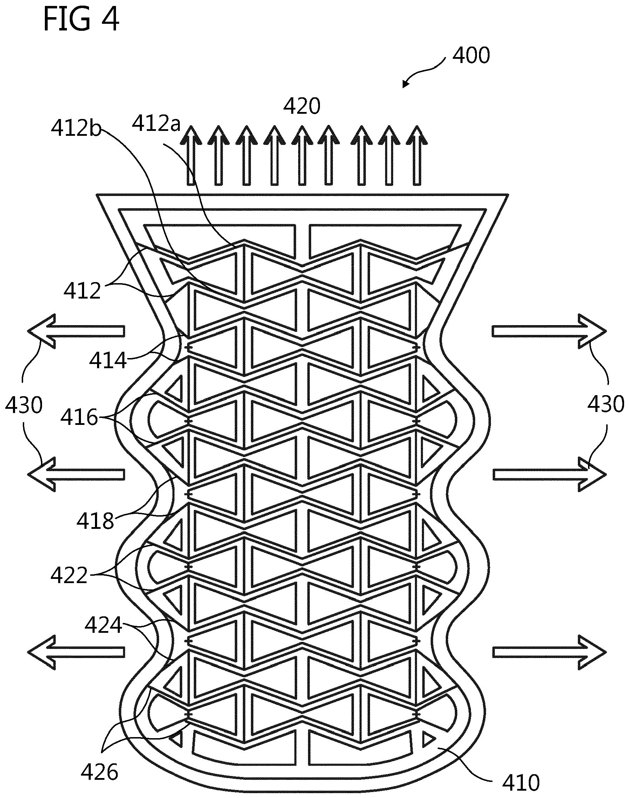

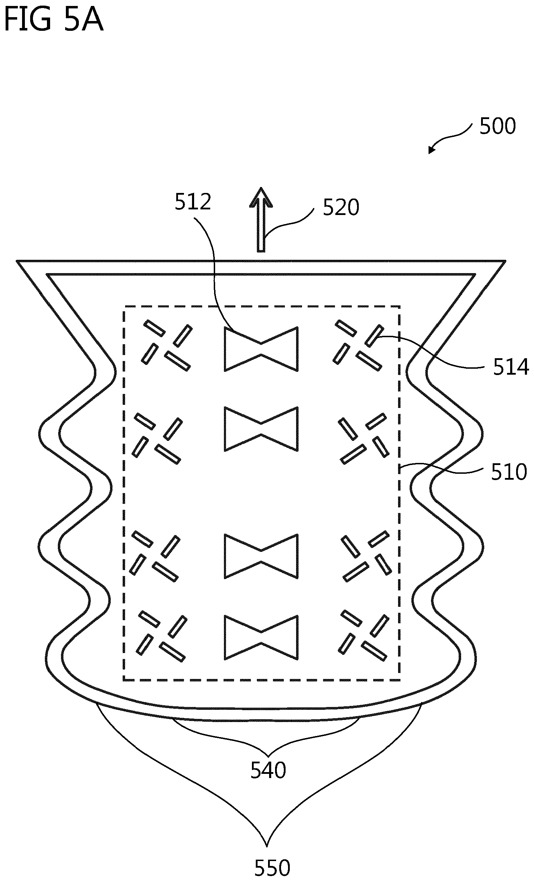

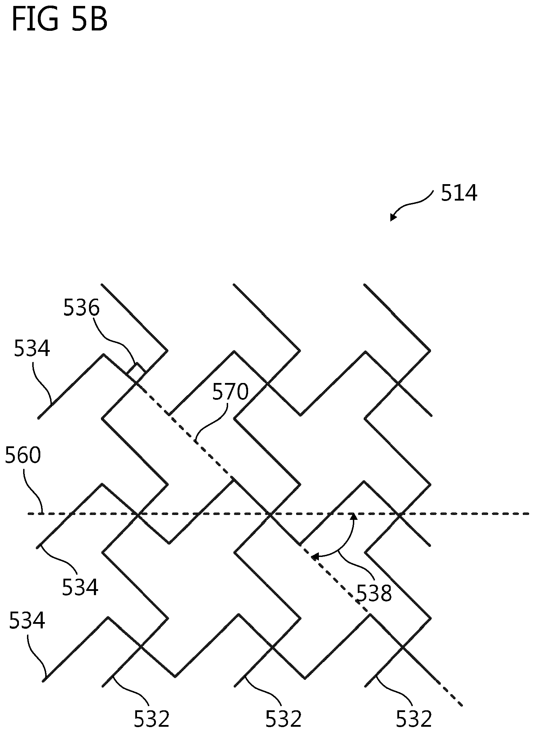

The embodiments illustrated in figures 4, 5A and 5B are not within the scope of the current invention.

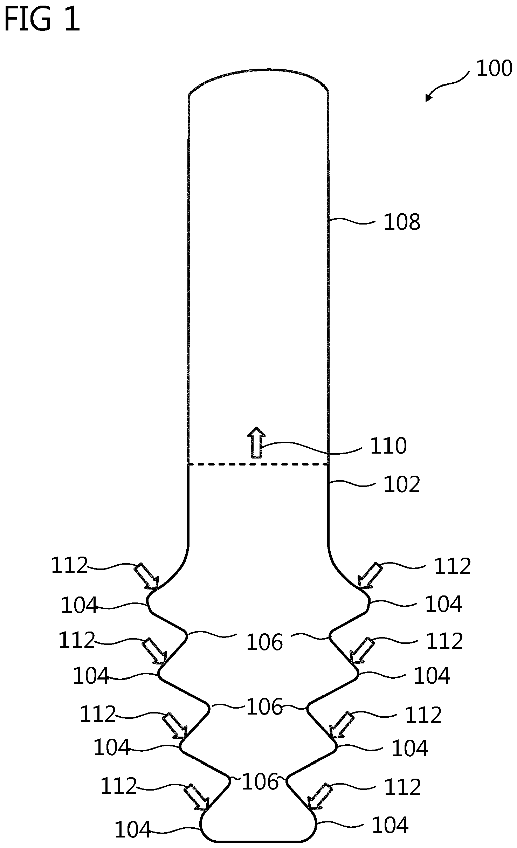

FIG 1 is a schematic of stress experienced in a turbine blade root 102. As shown in FIG 1, the figure is a free body diagram showing the load applied on the turbine blade root 102 and reaction forces 112 generated at a contact interface between the turbine blade root and the slot in the rotating disc. The blade root 102 is part of a turbine blade assembly 100 that includes a blade body 108. The blade root 102 includes multiple lugs 104 and fillets 106. During operation, the blade body 108 and the blade root 102 exert a centrifugal force 110 on the blade root 102 in view of the rotational movement. Additionally, the lugs 104 of the blade root 102 experience a reaction force 112 from a disc (not shown in FIG 1) in which blade root 102 is mounted.

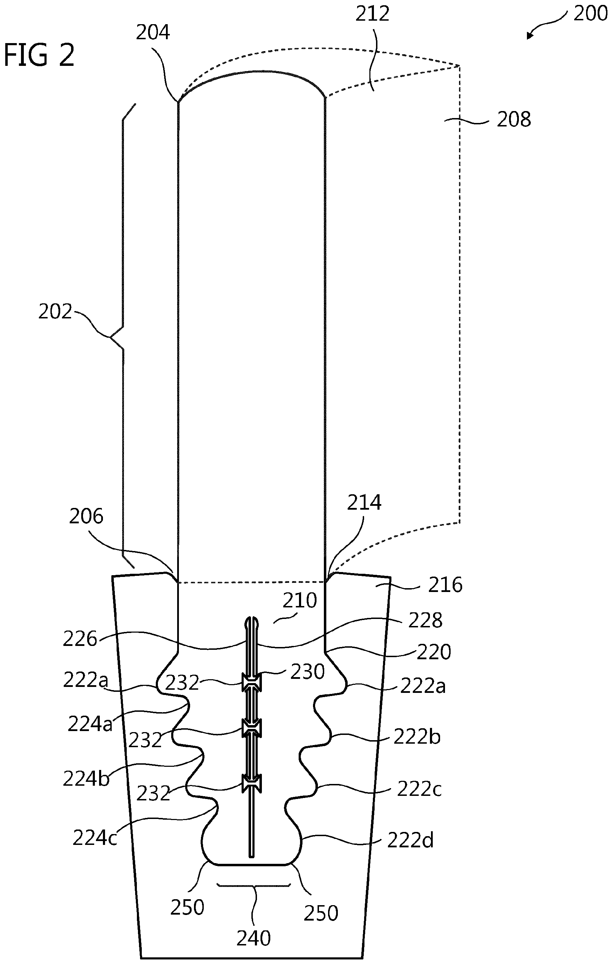

FIG 2 is a schematic of a turbine blade assembly 200 with a stress reducing structure 210, according to the present invention. The turbine blade assembly 200 includes a blade body 202 including a free end 204 and a joint end 206. The blade body 202 includes an airfoil section 208 along one side of the blade body 202 extending from the joint end 206 to the free end 204. The blade body 202 also includes a shroud 212 at the free end 204 of the blade body 202.

As shown in FIG 2, the turbine blade assembly 200 includes a blade platform 214 at the joint end 206 of the blade body 202. The blade platform 214 abuts a disc 216 of a turbo-machine.

Further, the turbine blade assembly 200 includes a blade root 220 that extends from the blade platform 214 towards the disc 216. The blade root 220 includes lugs 222a-222d, collectively referred as lugs 222. The blade root 220 also includes fillets 224a-224c, which in combination with the lugs 222 holds the blade body 202 in the disc 216. The fillets 224a, 224b and 224c are collectively referred to as 224. The blade root 220 further includes the stress reducing structure 210 capable of countering tensile stress at the fillets 224.

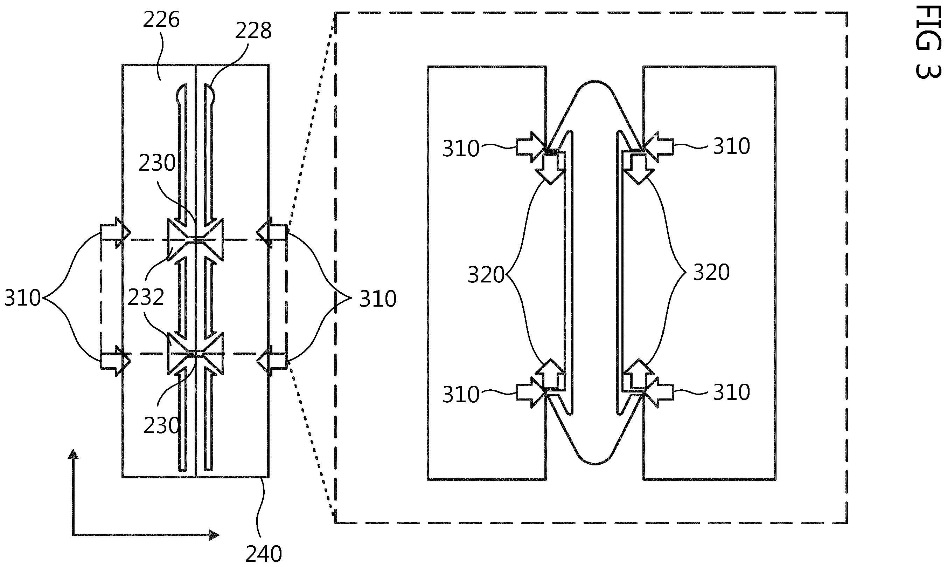

As shown in FIG 2, the stress reducing structure 210 includes slots 226 and 228 that are arranged parallel to each other. The stress reducing structure 210 includes one or more recess 230 that break the continuity of the slots 226 and 228. Further, the stress reducing structure 210 includes one or more compression structures 232 at the recess 230. The compression structures 232 are capable of generating compressive action along the disc radius to counter the tensile stress at the fillets 224. The compression structure 232 introduces a negative Poisson's ratio effect and therefore, is capable of generating the compressive action. The operation of the stress reducing structure 210 is further explained in FIG 3.

The position of the stress reducing structure 210 is optimized using know simulation tools to determine the position where the tensile stress is countered most effectively. FIG 2 merely indicates only one such position for the placement of the stress reducing structure.

In FIG 2, the blade root 220 comprises a central root section 240 and a peripheral root section 250. The central root section 240 is along a central longitudinal axis of the blade root. While the peripheral root section 250 is the off-centre root section towards the lugs 222 that are in contact with the disc 216. In the current example embodiment, the stress reducing structure 210 is located in the central root section 240 spaced between the lugs 222. Accordingly, the slots 226 and 228, the recess 230 and the compressive structure 232 are arranged across the lugs 222. In view of such arrangement, the compressive structure 232 is capable of generating compressive action between the lugs 222 along disc radius of the disc 216 to counter the tensile stress at fillets 224 connecting the lugs 222.

FIG 3 illustrates operation of the stress reducing structure 210 of the turbine blade assembly 200 in FIG 2. In operation, the stress reducing structure 210 is subject to compressive forces 310 in a circumferential direction along a circumference of the disc (not shown in FIG 3). The circumferential direction can also be referred to as a hoop direction.

The compressive forces 310 applied on the stress reducing structure 210 results in extension of the compressive structure 232 in a radial direction along a radius of the rotating disc. The extension of the compressive structure 232 in the radial direction results in a tensile state of stress in the compressive structure 232, which in turn generates a compressive action 320 in the central root section 240 of the blade root 220.

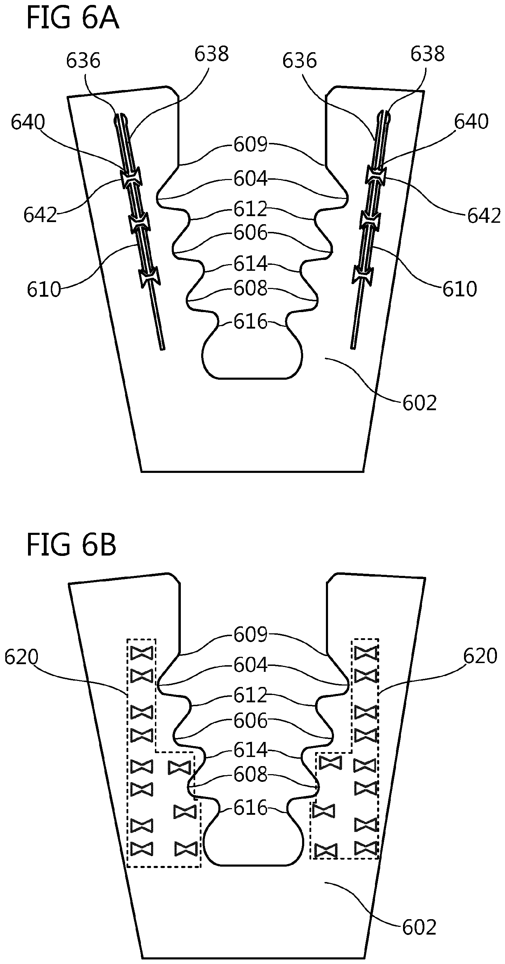

The stress reducing structure 210 can be introduced in the core of the root using any of the available machining techniques like laser etc. as an integral part of the central root section. Alternatively, the stress reducing structure 210 can be introduced as a separate component inside the central root section where slots are created. This same technique can be employed in a blade slot to reduce disk fillet stress as shown in FIG 6A and 6B. The shape of the stress reducing structure 210 and its dimensions can be optimized to maximize the useful life of the blade root 220 and/or the blade slot.

FIG 4 is a schematic of an example blade root 400 for the turbine blade assembly in FIG 2. The blade root 400 includes a stress reducing structure 410. The stress reducing structure 410 is capable of expanding azimuthally along the disc circumference of the disc under application of radial strain 420. When a turbo-machine is in operation, the turbine blade assembly is subject to a large centrifugal force, primarily due to the mass of the blade body or self weight. The blade root 400 is under a large amount of tensile stress. To counter the tensile stress, the stress reducing structure 410 is patterned to achieve a negative Poisson's ratio behaviour under application of the radial strain 420 on the blade root 400.

As shown in FIG 4, the blade root 400 utilizes an auxetic lattice structure as the stress reducing structure 410 to exhibit azimuthal expansion 430 under the radial strain 420. For the purpose of FIG 4, the stress reducing structure 410 is referred as the auxetic lattice structure. The auxetic lattice structure 410 is patterned to include multiple pairs of opposing zig-zag lines 412, 414, 416, 418, 422, 424, 426. Each of the opposing zig-zag lines comprise of proximate nodes and distant nodes. The distant nodes are then joined by ribs to form the auxetic lattice structure 410. For example, the opposing zig-zag line pair 412 includes distant nodes 412a and 412b. The distant nodes 412a and 412b are joined by rib 412c.

According to FIG 4, the stress reducing structure 410 is the auxetic lattice structure. However, this is limited only to the present embodiment. The stress reducing structure 410 can also be configured with a chiral lattice structure or a combination of auxetic lattice structure and chiral lattice structure as shown in FIG 5A.

FIG 5A is a schematic of a blade root 500 having a stress reducing structure 510 that is a combination of a auxetic lattice structure 512 and a chiral lattice structure 514. The blade root 500 can be divided into a central root section 540 and a peripheral root section 550. The auxetic lattice structure 512 is patterned in the central root section 540 and the chiral lattice structure is patterned in the peripheral root section 550.

As illustrated in FIG 4, the auxetic lattice structure 512 is used to exhibit azimuthal expansion under radial strain. Therefore, the central root section 540 utilizes the auxetic lattice structure 512 to counter the tensile stress experience.

The peripheral root section 550 of the blade root 500 is under a large amount of shear strain. The stress reducing structure 510 is patterned to achieve a chiral effect under application of the shear strain on the blade root 500. Accordingly, the peripheral root section 510 utilizes the chiral lattice structures 514 to exhibit azimuthal expansion under shear strain. The chiral lattice structure 514 is characterized by a coupling between effective normal strain and effective shear strain. This coupling between effective normal strains is achieved by patterning the chiral lattice structure 514 according to FIG 5B.

FIG 5B illustrates shape of the chiral lattice structure 514 of the blade root 500. The chiral lattice structure 514 is patterned to include multiple longitudinal zig-zag lines 532 and multiple lateral zig-zag lines 534 extending across the longitudinal zig-zag lines 532. The longitudinal zig-zag lines and the lateral zig-zag lines are patterned to be generally perpendicular to each other as indicated by 90° angle 536. As shown in FIG 5B the chiral lattice structure 514 is characterized by a non-zero value of a coupling coefficient 538 between effective normal strain 560 and effective shear strain 570. Therefore, the stress reducing structure 510 in FIG 5A effectively counters the tensile stress in the central root section 540 and the peripheral root section 550 by the auxetic lattice structure 512 and the chiral lattice structure 514.

FIGs 6A and 6B illustrate a schematic of a blade slot 602 with two patterns of stress reducing structures 610 and 620, according to the present invention. The blade slot 602 includes multiple disc fillets 604, 606, 608 and 609 and multiple disc lugs 612, 614, 616.

In FIG 6A, the stress reducing structure 610 includes slots 636 and 638 that are arranged parallel to each other. The stress reducing structure 610 includes one or more recess 640 that break the continuity of the slots 636 and 638. Further, the stress reducing structure 610 includes one or more compression structures 642 at the recess 640. The compression structures 642 are capable of generating compressive action along the disc radius to counter the tensile stress at the disc fillets 604, 606, 608 and 609. The compression structure 642 introduces a negative Poisson's effect and therefore, is capable of generating the compressive action.

In FIG 6B, the stress reducing structure 620 is patterned as an auxetic lattice structure. The stress reducing structure 620 is capable of expanding azimuthally along the disc circumference of the disc under application of radial strain. When a turbo-machine is in operation, the turbine blade assembly is subject to a large centrifugal force, primarily due to self weight of the turbine blade assembly. A blade root is under a large amount of tensile stress, which in turn causes tensile stress at the disc fillets 604, 606, 608 and 609. To counter the tensile stress, the stress reducing structure 620 is patterned to achieve a negative Poisson's ratio behaviour under application of the radial strain. This in turn results in expansion of the stress reducing structure 620, which improves contact with the blade root and therefore, reduces tensile stress at the disc fillets 604, 606, 608 and 609.

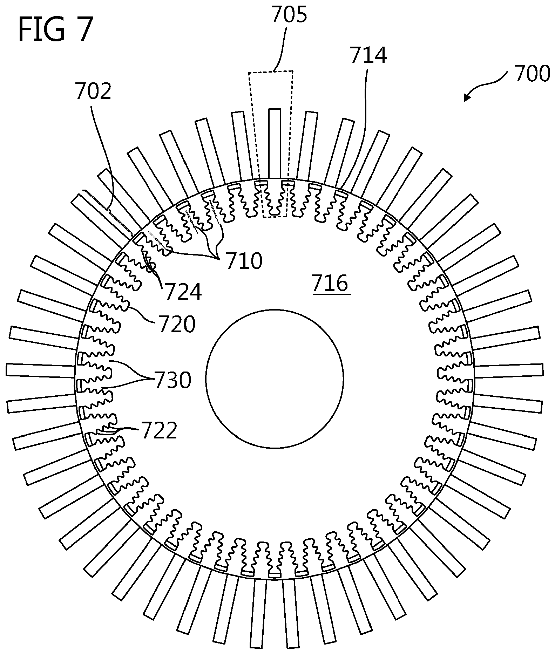

FIG 7 is a schematic of a rotor 700 of a turbo machine according to the present invention. The rotor 700 is housed in a housing of the turbo-machine (not shown in FIG 7). The rotor 700 includes a disc 716 comprising blade slots 730. The blade slots 730 include disc fillets and disc lugs to form a fir tree profile.

The rotor 700 also includes turbine blade assemblies 705 that engage with the blade slots 730 by means of blade roots 720 insertable into the blade slot 730. The disc fillets and disc lugs receive lugs 722 and fillets 724 of the blade roots 720. The blade roots 730 engage the blade slots 730 to secure the turbine blade assemblies 705 to the disc 716.

Each of the turbine blade assemblies 705 also includes a blade body 702 and a blade platform 714 that extends to form the blade root 720.

As shown in FIG 7, a stress reducing structure 710 can be patterned in the blade root 720 or the blade slots 730. The stress reducing structure 710 is capable of reducing tensile stress in the fillets 724 as illustrated in FIG 2 and 3. Further, the stress reducing structure 710 in the blade slots 730 are capable of countering tensile stress in the disc fillets (where the lugs 722 engage with the blade slot 730).

It will be appreciated that the aforementioned stress reducing structure 710 is not limited to the pattern shown in the figures, specifically FIG 7. For example, the shape and pattern of the stress reducing structure 710 can be patterned according to the structures illustrated in FIGs 4 and 5B or a combination of both. Even though the present disclosure has been described in detail with reference to specific embodiments, it will be appreciated that the various modifications and changes can be made to these embodiments without departing from the scope of the present disclosure as set forth in the claims. The specification and the drawings are to be regarded as an illustrative thought instead of merely restrictive thought.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may affect numerous modifications thereto and changes may be made without departing from the scope of the invention in its aspects as defined by the appended claims.

Reference list:

FIG 1

    turbine blade assembly 100
    turbine blade root 102
    lugs 104
    fillets 106
    blade body 108
    centrifugal force 110
    reaction force 112

FIG 2

    turbine blade assembly 200
    stress reducing structure 210
    blade body 202
    free end 204
    joint end 206
    airfoil section 208
    shroud 212
    blade platform 214
    rotating disc 216
    blade root 220
    lugs 222a-222d
    fillets 224a-224c
    slots 226 and 228
    recess 230
    compression structures 232
    central root section 240

    peripheral root section 250

FIG 3

compressive forces 310

FIG 4

    blade root 400
    stress reducing structure 410
    pairs of opposing zig-zag lines 412, 414, 416, 418, 422, 424, 426
    distant nodes 412a and 412b
    rib 412c.
    radial strain 420
    azimuthal expansion 430

FIG 5A

    blade root 500
    stress reducing structure 510
    auxetic lattice structure 512
    chiral lattice structure 514
    central root section 540
    peripheral root section 550

FIG 5B

    longitudinal zig-zag lines 532
    lateral zig-zag lines 534
    90° angle 536
    coupling coefficient 538
    effective normal strain 560
    effective shear strain 570

FIGs 6A and 6B

    blade slot 602
    disc fillets 604, 606, 608 and 609
    disc lugs 612, 614, 616.

FIG 6A

    stress reducing structure 610
    slots 636 and 638
    recess 640
    compression structures 642

FIG 6B

stress reducing structure 620

FIG 7

    rotor 700
    rotating disc 716
    blade slots 730
    turbine blade assemblies 705
    blade roots 720
    lugs 722
    fillets 724
    blade platform 714
    stress reducing structure 710
    blade slots 730

**Claims**

1.  A turbine blade assembly (200, 705) for turbo-machines comprising:
    a blade body (202, 702) including a free end (204) and a joint end (206), the blade body (202) comprising:

        an airfoil section (208) along at least one side of the blade body (202) extending from the joint end to the free end; and
        a blade platform (214, 714) at the joint end of the blade body (202), suitable to abut a disc (216, 716) of a turbo-machine; and
        a blade root (220, 400, 500, 720) that extends from the blade platform (214) towards the disc, the blade root (220, 400, 500, 720) comprising a plurality of lugs (222a-222d, 722) and a plurality of fillets (224a-224c, 724), wherein the blade root (220, 400, 500, 720) comprises a stress reducing structure (210, 410, 510, 710) capable of countering stress at the plurality of fillets (224, 724), wherein the blade root (220) further comprises:

            a central root section (240) along central longitudinal axis of the blade root (220); wherein the stress reducing structure (210) is located in the central root section between at least two lugs (222a, 222b) of the plurality of lugs (222a-222d),
            **characterized in that**
            the stress reducing structure (210) in the blade root (220) comprises slots (226, 228) with at least one recess (230), wherein the recess (230) is a break in the continuity of the slots (226, 228), and at least one a compression structure (232) at the at least one recess (230), wherein the compression structure (232) is capable of generating compressive action along the disc radius to counter the stress at the plurality of fillets (224a-224c, 724), wherein the stress reducing structure (410, 510) is capable of expanding azimuthally along a disc circumference of the disc under application of radial strain along a disc radius of the disc.

2.  The turbine blade assembly (200, 705) according to claim 1, wherein position and pattern of the stress reducing structure (210, 410, 510, 710) in the blade root (220, 400, 500, 720) is optimized to counter the stress at the plurality of fillets (224a-224c, 724).

3.  The turbine blade assembly (200) according to one of claim 1 to claim 2,
    wherein the at least one compressive structure is capable of generating compressive action between the at least two lugs along the disc radius to counter the stress at an at least one fillet (224a) connecting the at least two lugs (222a-222b) .

4.  A turbo-machine comprising:

        a housing; and
        a rotor (700) housed within the housing, the rotor (700) comprising:

            a disc (716) comprising at least one blade slot (730), wherein the at least one blade slot comprises at least one disc fillet,
            wherein the turbo-machine **characterized by**
            at least one turbine blade assembly (705) according to claims 1-3, each comprising a blade root (720) insertable into the at least one blade slot (730) in an axial direction to engage the at least blade slot to secure the turbine blade assembly (705) to the disc, wherein the at least one blade slot comprises a stress reducing structure (710) capable of countering stress in the at least one disc fillet.

5.  The turbo-machine according to claim 4, wherein position and pattern of the stress reducing structure (710) in the at least one blade slot is optimized to counter the stress at the at least one disc fillet.

6.  The turbo-machine according to the claim 4, wherein the stress reducing structure (710) is capable of expanding azimuthally along a disc circumference of the disc under application of radial strain along a disc radius of the disc.

7.  The turbo-machine according to the claim 4, wherein the stress reducing structure (710) is capable of expanding azimuthally along the disc circumference under application of shear strain.

8. A method for manufacturing of a turbo-machine comprising a turbine blade assembly (200, 705) according to claims 1-3 and a blade slot comprising a least one disc fillet (730, 602), the method comprising the steps of:

generating the blade slot (730, 602) comprising a stress reducing structure (710) capable of countering stress in the at least one disc fillet, via one of electrical discharge machining, laser cutting techniques and additive manufacturing techniques; and
generating the turbine blade assembly (200, 705) via one of electrical discharge machining, laser cutting techniques and additive manufacturing techniques.

**Patentansprüche**

1. Turbinenschaufelanordnung (200, 705) für Turbomaschinen, umfassend:

einen Schaufelkörper (202, 702), der ein freies Ende (204) und ein Anschlussende (206) beinhaltet, wobei der Schaufelkörper (202) umfasst:

einen Flügelabschnitt (208) entlang mindestens einer Seite des Schaufelkörpers (202), der sich von dem Anschlussende zu dem freien Ende erstreckt, und
einen Schaufelunterbau (214, 714) an dem Anschlussende des Schaufelkörpers (202), dazu geeignet, an einer Scheibe (216, 716) einer Turbomaschine anzuliegen, und

einen Schaufelfuß (220, 400, 500, 720), der sich von dem Schaufelunterbau (214) hin zu der Scheibe erstreckt, wobei der Schaufelfuß (220, 400, 500, 720) mehrere Nasen (222a-222d, 722) und mehrere Hohlkehlen (224a-224c, 724) umfasst, wobei der Schaufelfuß (220, 400, 500, 720) eine spannungsreduzierende Struktur (210, 410, 510, 710) umfasst, die in der Lage ist, Spannung an den mehreren Hohlkehlen (224, 724) entgegenzuwirken, wobei der Schaufelfuß (220) ferner umfasst:

einen mittleren Fußabschnitt (240) entlang der mittleren Längsachse des Schaufelfußes (220), wobei sich die spannungsreduzierende Struktur (210) in dem mittleren Fußabschnitt zwischen mindestens zwei Nasen (222a, 222b) der mehreren Nasen (222a-222d) befindet,
**dadurch gekennzeichnet, dass**
die spannungsreduzierende Struktur (210) in dem Schaufelfuß (220) Schlitze (226, 228) mit mindestens einer Vertiefung (230) umfasst, wobei die Vertiefung (230) ein Bruch in der Kontinuität der Schlitze (226, 228) ist, und mindestens eine Kompressionsstruktur (232) an der mindestens einen Vertiefung (230), wobei die Kompressionsstruktur (232) in der Lage ist, entlang des Scheibenradius eine komprimierende Wirkung zu erzeugen, um der Spannung an den mehreren Hohlkehlen (224a-224c, 724) entgegenzuwirken, wobei die spannungsreduzierende Struktur (410, 510) in der Lage ist, sich beim Anlegen einer radialen Belastung entlang eines Scheibenradius der Scheibe entlang eines Scheibenumfangs der Scheibe scheitelwinklig auszudehnen.

2. Turbinenschaufelanordnung (200, 705) nach Anspruch 1, wobei Position und Muster der spannungsreduzierenden Struktur (210, 410, 510, 710) in dem Schaufelfuß (220, 400, 500, 720) optimiert sind, um der Spannung an den mehreren Hohlkehlen (224a-224c, 724) entgegenzuwirken.

3. Turbinenschaufelanordnung (200) nach einem der Ansprüche 1 bis 2,
wobei die mindestens eine komprimierende Struktur in der Lage ist, zwischen den mindestens zwei Nasen entlang des Scheibenradius eine komprimierende Wirkung zu erzeugen, um der Spannung an mindestens einer Hohlkehle (224a), die die mindestens zwei Nasen (222a-222b) verbindet, entgegenzuwirken.

4. Turbomaschine, umfassend:

ein Gehäuse und
einen Rotor (700), der in dem Gehäuse untergebracht ist, wobei der Rotor (700) umfasst:

eine Scheibe (716), die mindestens einen Schaufelschlitz (730) umfasst, wobei der mindestens eine Schaufelschlitz mindestens eine Scheibenhohlkehle umfasst,
wobei die Turbomaschine **gekennzeichnet ist durch**:
mindestens eine Turbinenschaufelanordnung (705) nach einem der Ansprüche 1 bis 3, jeweils einen Schaufelfuß (720) umfassend, der in einer axialen Richtung in den mindestens einen Schaufelschlitz (730) eingesetzt werden kann, um mit dem mindestens einen Schaufelschlitz in Eingriff zu gelangen, um die Turbinenschaufelanordnung (705) an der Scheibe zu sichern, wobei der mindestens eine Schaufelschlitz eine spannungsreduzierende Struktur (710) umfasst, die in der Lage ist, Spannung in der mindestens einen Scheibenhohlkehle entgegenzuwirken.

5. Turbomaschine nach Anspruch 4, wobei Position und Muster der spannungsreduzierenden Struktur (710) in dem mindestens einen Schaufelschlitz optimiert sind, um der Spannung an der mindestens einen Scheibenhohlkehle entgegenzuwirken.

6. Turbomaschine nach Anspruch 4, wobei die spannungsreduzierende Struktur (710) in der Lage ist, sich beim Anlegen einer radialen Belastung entlang eines Scheibenradius der Scheibe entlang eines Scheibenumfangs der Scheibe scheitelwinklig auszudehnen.

7. Turbomaschine nach Anspruch 4, wobei die spannungsreduzierende Struktur (710) in der Lage ist, sich beim Anlegen einer Scherbelastung entlang des Scheibenumfangs scheitelwinklig auszudehnen.

8. Verfahren zum Herstellen einer Turbomaschine, die eine Turbinenschaufelanordnung (200, 705) nach Anspruch 1 bis 3 und einen Schaufelschlitz umfasst, der mindestens eine Scheibenhohlkehle (730, 602) umfasst, wobei das Verfahren folgende Schritte umfasst:
Erzeugen des Schaufelschlitzes (730, 602), der eine spannungsreduzierende Struktur (710) umfasst, die in der Lage ist, Spannung in der mindestens einen Scheibenhohlkehle entgegenzuwirken, mittels eines von Funkenerosion, Laserschneidetechniken und additiven Herstellungstechniken und Erzeugen der Turbinenschaufelanordnung (200, 705) mittels eines von Funkenerosion, Laserschneidetechniken und additiven Herstellungstechniken.

**Revendications**

1. Ensemble à aube de turbine (200, 705) pour turbomachines, comprenant :

    un corps d'aube (202, 702) incluant une extrémité libre (204) et une extrémité à joint (206), le corps d'aube (202) comprenant :

        un profil aérodynamique (208) le long d'au moins un côté du corps d'aube (202) s'étendant depuis l'extrémité à joint jusqu'à l'extrémité libre ; et
        une plate-forme d'aube (214, 714) à l'extrémité à joint du corps d'aube (202), appropriée pour être contiguë à un disque (216, 716) d'une turbomachine ; et

    une emplanture d'aube (220, 400, 500, 720) qui s'étend à partir de la plate-forme d'aube (214) vers le disque, l'emplanture d'aube (220, 400, 500, 720) comprenant une pluralité de pattes (222a-222d, 722) et une pluralité de congés (224a-224c, 724), dans lequel
l'emplanture d'aube (220, 400, 500, 720) comprend une structure de réduction de contrainte (210, 410, 510, 710) capable de contrer une contrainte au niveau de la pluralité de congés (224, 724), dans lequel l'emplanture d'aube (220) comprend en outre :

        une section d'emplanture centrale (240) le long de l'axe longitudinal central de l'emplanture d'aube (220) ; dans lequel la structure de réduction de contrainte (210) est située dans la section d'emplanture centrale entre au moins deux pattes (222a, 222b) de la pluralité de pattes (222a-222d),
        **caractérisé en ce que**
        la structure de réduction de contrainte (210) dans l'emplanture d'aube (220) comprend des fentes (226, 228) avec au moins un évidement (230), dans lequel l'évidement (230) est une interruption dans la continuité des fentes (226, 228), et au moins une structure de compression (232) au niveau de l'au moins un évidement (230), dans lequel la structure de compression (232) est capable de générer une action de compression le long du rayon de disque pour contrer la contrainte au niveau de la pluralité de congés (224a-224c, 724), dans lequel la structure de réduction de contrainte (410, 510) est capable de s'agrandir de façon azimutale le long d'une circonférence de disque du disque sous application de déformation radiale le long d'un rayon de disque du disque.

2. Ensemble à aube de turbine (200, 705) selon la revendication 1, dans lequel une position et une configuration de la structure de réduction de contrainte (210, 410, 510, 710) dans l'emplanture d'aube (220, 400, 500, 720) sont optimisées pour contrer la contrainte au niveau de la pluralité de congés (224a-224c, 724).

3. Ensemble à aube de turbine (200) selon l'une de la revendication 1 à la revendication 2,
dans lequel l'au moins une structure de compression est capable de générer une action de compression entre les au moins deux pattes le long du rayon de disque pour contrer la contrainte au niveau d'au moins un congé (224a) raccordant les au moins deux pattes (222a-222b).

4. Turbomachine, comprenant :

un logement ; et
un rotor (700) logé à l'intérieur du logement, le rotor (700) comprenant :

un disque (716) comprenant au moins une fente d'aube (730), dans laquelle l'au moins une fente d'aube comprend au moins un congé de disque,
dans laquelle la turbomachine est **caractérisée par**
au moins un ensemble à aube de turbine (705) selon les revendications 1 à 3, chacun comprenant une emplanture d'aube (720) insérable dans l'au moins une fente d'aube (730) dans une direction axiale pour entrer en prise avec l'au moins une fente d'aube pour fixer l'ensemble à aube de turbine (705) au disque, dans laquelle l'au moins une fente d'aube comprend une structure de réduction de contrainte (710) capable de contrer une contrainte dans l'au moins un congé de disque.

5. Turbomachine selon la revendication 4, dans laquelle une position et une configuration de la structure de réduction de contrainte (710) dans l'au moins une fente d'aube sont optimisées pour contrer la contrainte au niveau de l'au moins un congé de disque.

6. Turbomachine selon la revendication 4, dans laquelle la structure de réduction de contrainte (710) est capable de s'agrandir de façon azimutale le long d'une circonférence de disque du disque sous application de déformation radiale le long d'un rayon de disque du disque.

7. Turbomachine selon la revendication 4, dans laquelle la structure de réduction de contrainte (710) est capable de s'agrandir de façon azimutale le long de la circonférence de disque sous application de déformation de cisaillement.

8. Procédé pour la fabrication d'une turbomachine comprenant un ensemble à aube de turbine (200, 705) selon les revendications 1 à 3 et une fente d'aube comprenant au moins un congé de disque (730, 602), le procédé comprenant les étapes de :

la génération de la fente d'aube (730, 602) comprenant une structure de réduction de contrainte (710) capable de contrer une contrainte dans l'au moins un congé de disque, par l'intermédiaire d'un d'usinage par électroérosion, de techniques de découpage par laser et de techniques de fabrication additive ; et
la génération de l'ensemble à aube de turbine (200, 705) par l'intermédiaire d'un d'usinage par électroérosion, de techniques de découpage par laser et de techniques de fabrication additive.

FIG 1

FIG 2

## FIG 3

FIG 4

# FIG 5A

## FIG 5B

## FIG 6A

## FIG 6B

## FIG 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2208859 A2
- EP 3199764 A1

- JP S5872604 A

**Non-patent literature cited in the description**

- Turbine blade fir-tree root design optimization using intelligent CAD and finite element analysis. *Computers & Structures,* 2002, 1853-1867